# FASCICULE DE BREVET EUROPEEN

(11) **EP 0 427 651 B1**
(45) Date de publication et mention de la délivrance du brevet: **09.09.1998**
(21) Numéro de dépôt: 90440095.9
(22) Date de dépôt: 07.11.1990
(51) Int. Cl.: B28B 7/22, B29C 67/24, B29C 41/12, B28B 7/36, B29D 7/00

(54) **Procédé de réalisation de plaques de parement de façades ou de revêtement de sols, ou autres, en matière synthétique, dispositifs pour la mise en oeuvre de ce procédé et plaque ainsi obtenue**
Verfahren und Vorrichtung zur Herstellung einer synthetischen Schichtstoffplatte sowie Gegenstand daraus
Process and apparatus for the manufacture of synthetic facing panels, and panel thus produced

(30) Priorité: 07.11.1989 FR 8914761
(43) Date de publication de la demande: 15.05.1991
(73) Titulaire: Caruso, Philippe, F-90150 Fontaine (FR)
(72) Inventeur: Caruso, Philippe, F-90150 Fontaine (FR)
(74) Mandataire: Nuss, Pierre

(56) Documents cités:
- EP-A- 0 109 908
- EP-A- 0 263 770
- CH-A- 371 035
- GB-A- 971 619
- GB-A- 2 231 527
- US-A- 1 958 184
- US-A- 4 213 926
- DERWENT JAPANESE PATENTS REPORT, AN-75-72946w (44), Derwent week 7544; & JP-A- 49 085 124 (SHOWA DENKO K.K.)

## Description

La présente invention concerne le domaine du bâtiment, en particulier des revêtements de façades ou de sols, ou autres, et a pour objet un procédé de réalisation de plaques de parement de façades, de revêtement de sols, ou autres, en matière synthétique.

L'invention a également pour objet des dispositifs pour la mise en oeuvre de ce procédé et une plaque ainsi obtenue.

Le revêtement de façades au moyen de parements est généralement effectué avec des parements de tous types, à savoir en pierre, en céramique, en fibro-ciment, en bois, en verre ou en métal. De tels parements présentent, toutefois, l'inconvénient, soit d'une relative fragilité nécessitant un dimensionnement important en vue de leur résistance mécanique, soit encore de ne pas permettre un effet esthétique, en particulier décoratif satisfaisant.

A cet effet, il a été proposé de réaliser des plaques de parement en résine polyester, relativement légères, et offrant une bonne tenue mécanique et aux agents climatiques. De telles plaques nécessitent, cependant, en vue de l'obtention d'un état de surface acceptable, un usinage ultérieur par polissage ou encore une enduction d'une couche de gel de finition. Une telle couche peut également être disposée sur la face visible du parement, par disposition préalable au fond du moule de fabrication de ce dernier. Toutefois, les plaques en résine existant actuellement ne permettent pas l'obtention directe, sans usinage, ni enduction, d'un fini de surface brillant et/ou granité. Par ailleurs, les plaques de parement connues présentent généralement des bords à angle vif nuisibles à l'esthétique.

Par ailleurs, dans le document CH-A-371 035 on a prévu une coulée du mortier comportant une résine à base de méthacrylate de méthyle en une seule opération, sans enduction au préalable du film en fond de moule au moyen d'un revêtement de surface. On y met en oeuvre, d'une part, une résine époxyde en matière minérale granuleuse et, d'autre part, un mélange de produits pour la réalisation d'une pierre artificielle, le fini de surface étant obtenu uniquement par la résine utilisée. Dans ce document, on met donc en oeuvre une résine époxyde disposée par enduction de couches successives sur un film élastique, la couche interne étant pourvue, avant durcissement d'un revêtement minéral granuleux sur lequel est coulée, après durcissement, une masse pour formation d'une pierre artificielle. Or, la résine époxyde, qui est un thermodurcissant, présente des réactions totalement différentes d'une résine à base méthacrylate et son mélange direct avec le mortier ne permet pas l'obtention du fini de surface désiré.

La présente invention a pour but de pallier ces inconvénients.

Elle a, en effet, pour objet un procédé de réalisation de plaques de parement de façades ou de revêtement de sols, ou autres, en matière synthétique, caractérisé en ce qu'il consiste essentiellement à dépoussiérer par aspiration un moule monté sur une table vibrante, à découper un film en matière synthétique dont les dimensions excèdent celles du moule augmentées de la hauteur des bords de ce dernier, à poser et à centrer le film dans le moule en laissant reposer ses bords sur les bords du moule, puis à joindre lesdits bords aux coins au moyen de pinces, à effectuer un nouveau contrôle d'absence de poussières ou autres sous le film, à conformer ensuite les arêtes au niveau du fond du moule au moyen d'un outil à bout arrondi, à réaliser alors une coulée d'un mélange à sec d'un produit synthétique avec ajout d'une résine au moyen d'une vis doseuse de malaxage dans le moule, à épandre le produit dans le moule au moyen d'une spatule, puis à vibrer pendant environ une minute le moule avec son contenu au moyen de la table, à démonter le mcule rempli de la table, à le transférer dans une chambre climatisée à une température comprise entre 25°C et 30°C et à laisser polymériser le produit pendant environ 30 minutes, puis à démouler la plaque obtenue et à retirer sur sa face apparente le film de matière synthétique.

L'invention a également pour objet un dispositif pour la mise en oeuvre de ce procédé, caractérisé en ce qu'il est essentiellement constitué par un moule monté par bridage sur une table vibrante et présentant des bords latéraux d'appui des bords d'un film en matière synthétique et par des pinces de jonction desdits bords du film au droit des coins du moule.

Conformément à une variante de réalisation de l'invention, le dispositif pour la mise en oeuvre du procédé est un dispositif mécanique automatisé, caractérisé en ce qu'il est constitué par un poste de nettoyage automatique des moules, par un poste de mise en place d'un film en matière synthétique, par un dispositif de régularisation du transfert des moules et de dépôt éventuel d'inserts ou analogues, par un poste de coulée et d'épandage du produit synthétique mélangé à la résine, par un poste de vibration des moules remplis, par un poste de travail intermédiaire et de contrôle du remplissage des moules, par un poste d'accumulation des moules relié à un local de polymérisation du mélange qu'ils renferment et introduisant lesdits moules dans ledit local, par un poste de réception des moules avec les plaques obtenues à la sortie du local de polymérisation et par un poste de démoulage, un ensemble de convoyeurs transportant les moules d'un poste à l'autre.

Par ailleurs, l'invention a également pour objet une plaque obtenue par application du procédé au moyen du dispositif décrit ci-dessus, caractérisée en ce qu'elle est constituée en une matière synthétique et présente une face apparente avec un fini de surface brillant et des bords arrondis.

L'invention sera mieux comprise, grâce à la description ci-après, qui se rapporte à des modes de réalisation préférés, donnés à titre d exemples non limitatifs, et expliqués avec référence aux dessins schématiques annexés, dans lesquels :
la figure 1 est une vue en perspective du dispositif pour la mise en oeuvre du procédé conforme à l'invention ;
la figure 2 est une vue partielle en perspective et en coupe d'une plaque obtenue par application du procédé au moyen du dispositif selon la figure 1 ;
la figure 3 est une vue en plan d'un dispositif mécanisé pour la mise en oeuvre du procédé conformément à l'invention ;
la figure 4 est une vue en élévation latérale du poste d'aspiration ;
la figure 5 est une vue en élévation latérale et en coupe du poste de coulée et d'épandage ;
la figure 6 est une vue partielle en coupe à plus grande échelle représentant le principe de coulée et de pesage du mélange de produit et de résine ;
la figure 7 est une vue en élévation latérale et en coupe du poste de vibration ;
la figure 8 est une vue en élévation par l'arrière et en coupe du dispositif au niveau du local de polymérisation ;
la figure 9 est une vue en plan et en coupe du local de polymérisation et des convoyeurs d'accumulation et de sortie, et
la figure 10 est une vue en élévation latérale et en coupe du local de polymérisation.

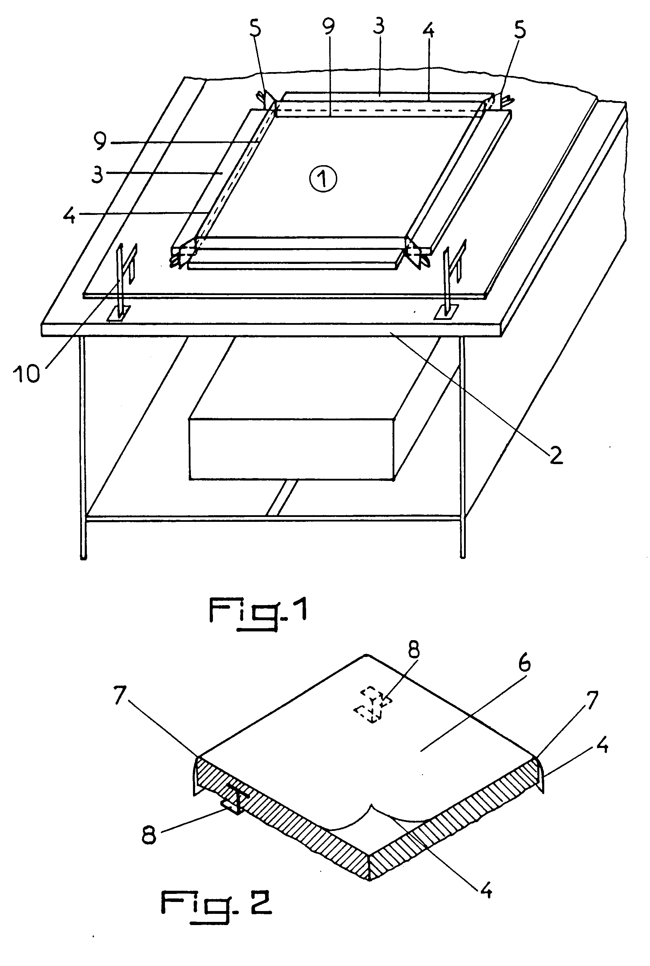

Conformément à l'invention, et comme le montre plus particulièrement, à titre d'exemple, la figure 1 des dessins annexés, le dispositif pour la mise en oeuvre du procédé de réalisation de plaques de parement de façades ou de revêtement de sols, ou autres, en matière synthétique, est essentiellement constitué par un moule 1 monté par bridage sur une table vibrante 2 et présentant des bords latéraux 3 d'appui des bords d'un film 4 en matière synthétique et par des pinces 5 de jonction desdits bords du film 4 au droit des coins du moule 1.

Le film 4 en matière synthétique est avantageusement réalisé en térephtalate de polyéthylène ou encore en polyester et présente une épaisseur comprise entre 20 microns et 40 microns, de préférence une épaisseur de 22 microns ou de 33 microns. Un tel film présente une bonne résistance à la traction transversale, ainsi qu'à la traction longitudinale et permet, sans aucun traitement superficiel, l'obtention d'un fini de surface parfait de la face apparente de la plaque moulée, tout en en permettant un démoulage aisé, par simple pelage. En outre, ce film 4 peut resté fixé à demeure sur la plaque pendant le transport et le stockage, réalisant ainsi une protection de ladite face apparente.

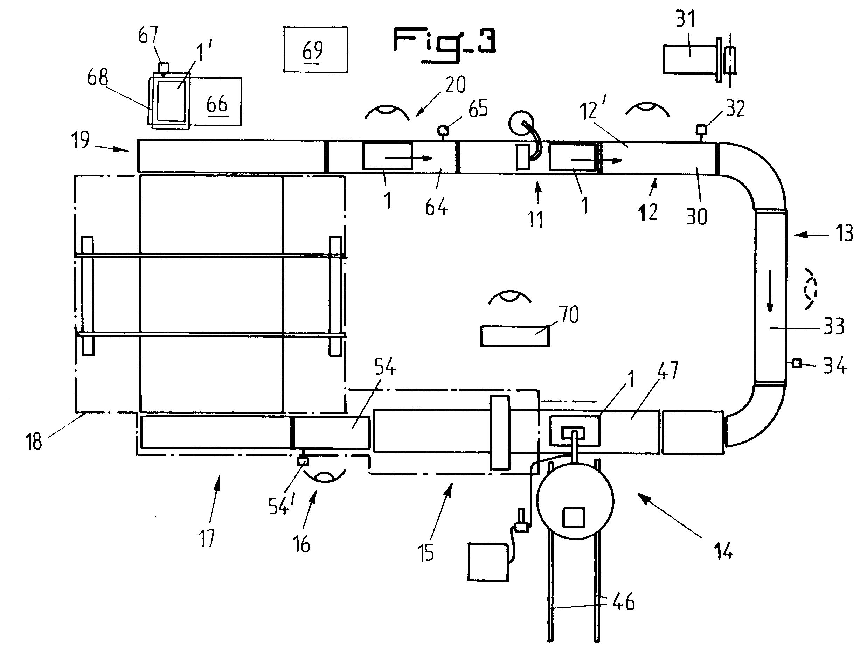

L'invention a également pour objet, comme le montre la figure 2, une plaque obtenue par application du procédé conforme à l'invention au moyen du dispositif selon la figure 1, caractérisée en ce qu'elle est constituée en une matière synthétique et présente une face apparente 6 avec un fini de surface brillant et des bords arrondis 7.

La matière synthétique constituant la plaque est formée par un béton polymère constitué par un mélange à base de méthacrylate de méthyle avec des charges telles que de la silice, du quartz de diverses granulométries, de la poudre d'ardoise, de la brique en poudre, etc...

Conformément à une caractéristique de l'invention, la plaque peut également être munie, sur sa face arrière, au moins près de ses côtés correspondant à ses parties supérieure et inférieure, ou sur toute sa périphérie, d'inserts 8 de fixation sur des éléments d'infrastructure. De tels inserts 8 peuvent facilement être mis en place lors de la coulée du mélange constitutif de la plaque et être maintenus dans leur position de service, pendant la polymérisation, au moyen d'un support s'appuyant sur le moule 1.

Ces inserts 8 sont plus particulièrement destinés à la fixation de plaques de faible épaisseur sur une infrastructure.

Selon une autre caractéristique de l'invention, la face apparente de la plaque 1 présente un aspect granité. Un tel aspect est obtenu par coopération de l'effet de vibration et de l'utilisation du film 4 en matière synthétique. En effet, par la vibration, les charges contenues dans le mélange ont tendance à migrer vers le fond du moule et l'utilisation du film 4 en matière synthétique permet une répartition parfaitement uniforme du produit pendant la polymérisation, sans formation de bulles de surface.

La réalisation d'une plaque conforme à l'invention s'effectue de la manière suivante :

Après dépoussiérage par aspiration du moule 1 monté sur la table vibrante 2, un film 4 en matière synthétique, dont les dimensions excédent celles du moule 1 augmentées de la hauteur des bords de ce dernier, à poser et à centrer le film 4 dans le moule 1 en laissant reposer ses bords sur les bords latéraux 3 du moule 1, puis à joindre lesdits bords aux coins au moyen de pinces 5.

Un nouveau contrôle d'absence de poussières ou autres sous le film 4 est alors effectué et les arêtes 9 au niveau du fond du moule 1 sont conformées ensuite au moyen d'un outil à bout arrondi et une coulée d'un mélange à sec d'un produit synthétique avec ajout d'une résine au moyen d'une vis doseuse de malaxage est réalisée dans le moule 1.

Le produit ainsi coulé est épandu dans le moule 1 au moyen d'une spatule, puis l'ensemble est vibré pendant environ une minute au moyen de la table 2.

Après cette opération de vibration, le moule rempli 1 est démonté de la table 2 par ouverture des brides de montage 10, puis transféré dans une chambre climatisée à une température comprise entre 25°C et 30°C, dans laquelle le produit est laissé à polymériser pendant environ 30 minutes.

Après polymérisation, la plaque obtenue est démoulée et le moule 1 est remonté sur la table vibrante 2 en vue d'une nouvelle opération de moulage.

Le film 4 de matière synthétique adhérant à la face apparente 6 peut alors être retiré ou être laissé sur cette dernière en vue d'assurer une protection pendant le stockage, le transport et la manutention.

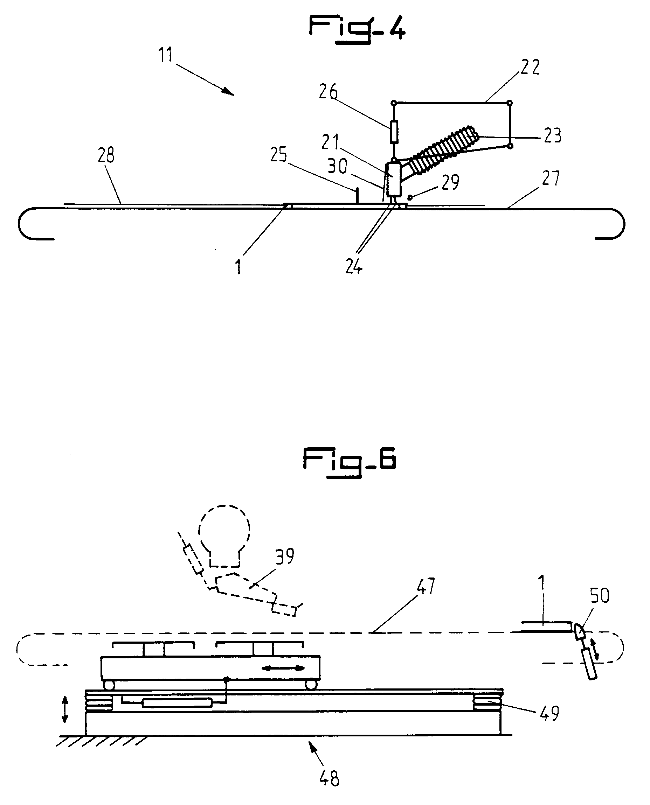

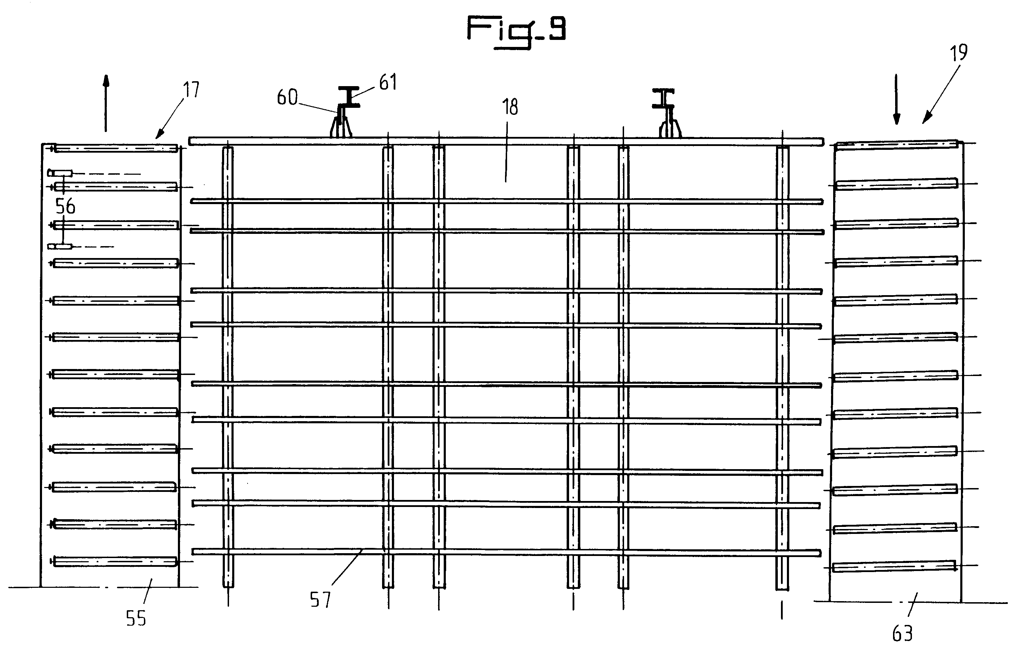

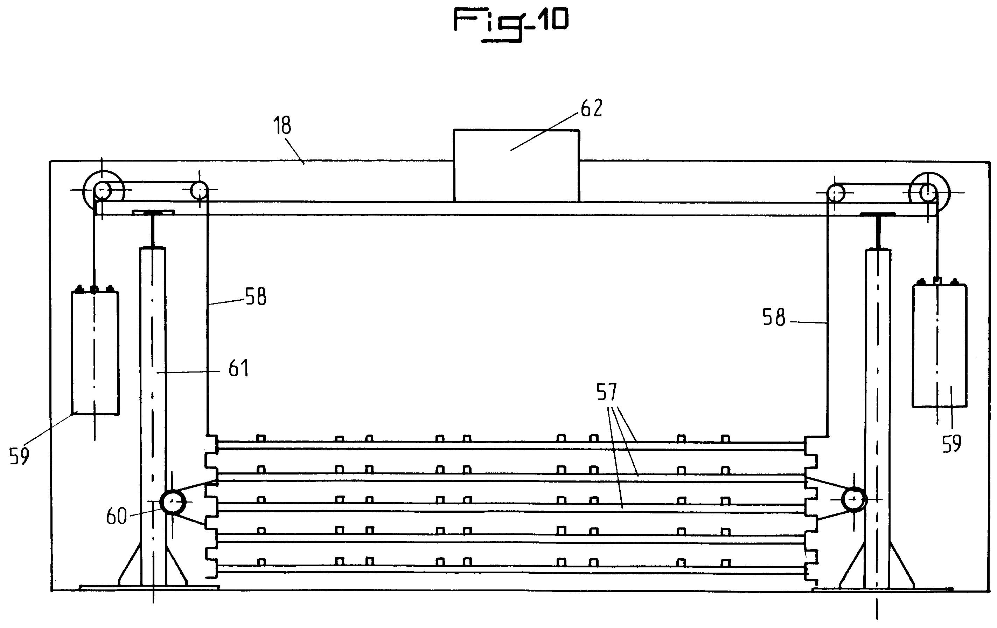

Conformément à une variante de réalisation de l'invention, et comme le montrent plus particulièrement les figures 3 à 10 des dessins annexés, le procédé peut également être mis en oeuvre au moyen d'un dispositif mécanique automatisé, qui est constitué par un poste 11 de nettoyage automatique des moules et par un poste 12 de mise en place d'un film en matière synthétique suivi d'un dispositif 13 de régularisation du transfert des moules et de dépôt éventuel d'inserts ou analogues.

Ce dispositif 13 est suivi par un poste 14 de coulée et d'épandage du produit synthétique mélangé à la résine, les moules remplis étant amenés à un poste de vibration 15, puis transférés à un poste 16 de travail intermédiaire et de contrôle du remplissage des moules.

A la sortie de ce poste, les moules sont transférés à un poste d'accumulation 17 relié à un local 18 de polymérisation du mélange qu'ils renferment et introduisant lesdits moules dans ledit local 18, dont la sortie, opposée au poste 17, est reliée à un poste 19 de réception des moules avec les plaques obtenues, un poste de démoulage 20 étant prévu à la suite de ce poste 19.

Les moules sont disposés sur un ensemble de convoyeurs les transportant en circuit fermé d'un poste à l'autre.

Le poste 11 de nettoyage automatique des moules, représenté plus particulièrement à la figure 4 des dessins annexés, est constitué par une buse d'aspiration transversale 21 montée à l'extrémité d'un bras articulé 22 d'un automate (non représenté) et raccordée par un flexible 23 à un dispositif d'aspiration, ladite buse 21 étant pourvue, de part et d'autre de son ouverture d'aspiration, de brosses 24 de nettoyage du fond des moules 1 disposés sur un premier convoyeur 27, une brosse fixe 25 étant montée, en outre, sur le châssis du convoyeur 27 devant la buse 21 vue dans le sens de translation des moules 1, de manière à s'appuyer sur les bords desdits moules 1.

Les éléments constitutifs du bras articulé 22 sont reliés entre eux à leur extrémité libre au moyen d'un vérin 26 réalisant la montée et la descente de la buse 21, dont la largeur correspond à la largeur des moules 1.

Les brosses 24 de nettoyage du fond du moule sont avantageusement des brosses à poils relativement souples permettant un balayage et une aspiration aisée des impuretés se trouvant au fond du moule, tandis que la brosse 25 s'appuyant sur les bords des moules 1 est une brosse à poils durs destinée au nettoyage des bords des moules 1, en particulier à l'enlèvement de dépôts accidentels d'un mélange de produit et de résine durci.

Le poste 11 est pourvu, en outre, d'une part, au-dessus de ses bords longitudinaux, de rives 28 de guidage et de centrage des moules 1 et, d'autre part, d'une cellule 29 de détection de l'arrivée du moule au droit de la buse 21, cette cellule commandant la descente de ladite buse qui est pourvue, sur sa face avant, d'un contact 30 détectant son arrivée contre le bord arrière du moule 1 à nettoyer et provoquant l'arrêt du convoyeur 27, actionnant la remontée de la buse 21 au moyen du vérin 26 après une temporisation, l'arrivée en fin de course de remontée de la buse 21 autorisant le redémarrage du convoyeur 27.

Ainsi, le nettoyage des moules 1 peut être réalisé d'une manière entièrement automatique ét très rapide.

Le poste 12 de mise en place d'un film en matière synthétique est constitué par un convoyeur 12' disposé dans le prolongement du convoyeur 27 et dont l'entraînement est interrompu au moyen d'un détecteur (non représenté) actionné par le moule 1, par un dispositif 31 de découpage à la longueur du film en matière synthétique, ainsi que par un moyen 32 de commande du redémarrage du convoyeur 30 à actionnement manuel.

A ce poste 12, l'opération de mise en place du film en matière synthétique est effectuée d'une manière analogue à celle décrite à propos du procédé manuel, l'opérateur découpant une longueur de film nécessaire au moule en fonction d'un gabarit prédéterminé et le déposant dans ledit moule en applicant parfaitement ledit film dans les coins et les arêtes inférieures des bords du moule, puis en joignant les parties relevées du film, aux coins, au moyen de pinces.

Il est également possible de réaliser le découpage, la prise, le transfert et la mise en place du film en matière synthétique de manière automatique par disposition d'un automate entre le dispositif de découpage 31 et le convoyeur 30, ledit automate étant pourvu, par exemple, d'un caisson d'aspiration présentant des dimensions égales à celles de la plaque à obtenir, donc au volume intérieur du moule 1, les pinces de fixation du film aux coins étant posées manuellement ou se présentant sous forme de pinces à actionnement mécanique au moyen d'actionneurs solidaires du bras de support du caisson d'aspiration. Dans un tel cas, les pinces peuvent avantageusement être pourvues d'un mécanisme de fermeture à came actionné par une clé, ou analogue, solidaire du caisson d'aspiration et entraînée, après accouplement avec ladite came, par un moteur pas-à-pas ou par un vérin rotatif.

Bien entendu, lors du démoulage des plaques, un dispositif correspondant d'ouverture des pinces devra être prévu ou bien l'opérateur devra être équipé d'une clé de forme correspondante.

Le dispositif 13 de régularisation du transfert des moules et de dépôt éventuel d'inserts ou analogues est également constitué par un convoyeur 33 et par un moyen 34 de commande de l'entraînement de ce convoyeur 33, le moyen 34 étant combiné avec un dispositif de détection de présence de moules (non représenté) commandant, soit l'arrêt du convoyeur 33, dont le redémarrage est commandé par le moyen 34, soit un fonctionnement cyclique dudit convoyeur 33 par coopération avec un automate programmable de contrôle en fonction de l'occupation des convoyeurs disposés en aval.

Ce dispositif 13 est plus particulièrement destiné à des opérations spéciales de mise en place d'inserts, et à la réalisation d'un espace tampon destiné à absorber un surplus de moules déjà préparés dans le cas de ralentissement des opérations en aval ou à alimenter les postes situés en aval en cas de défaut d'alimentation en continu de moules préparés.

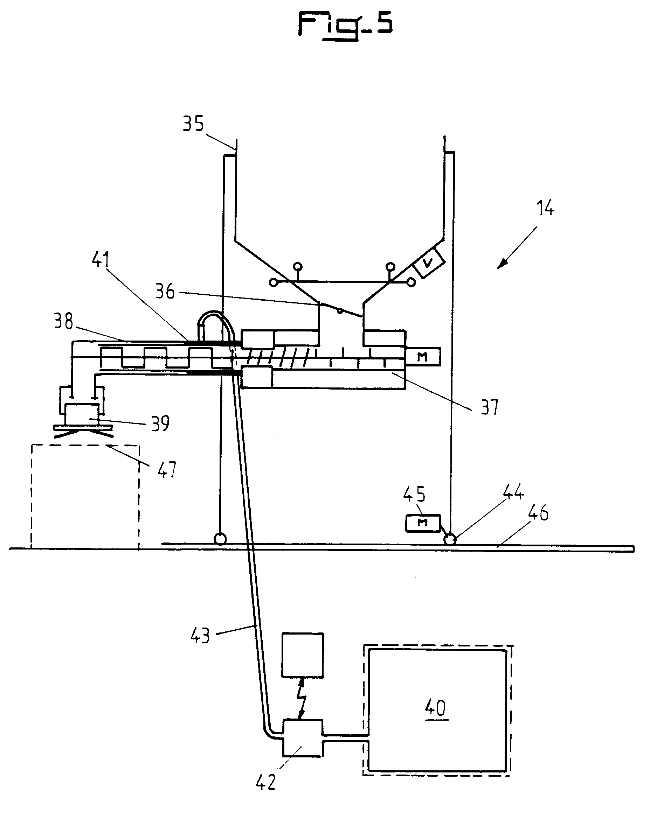

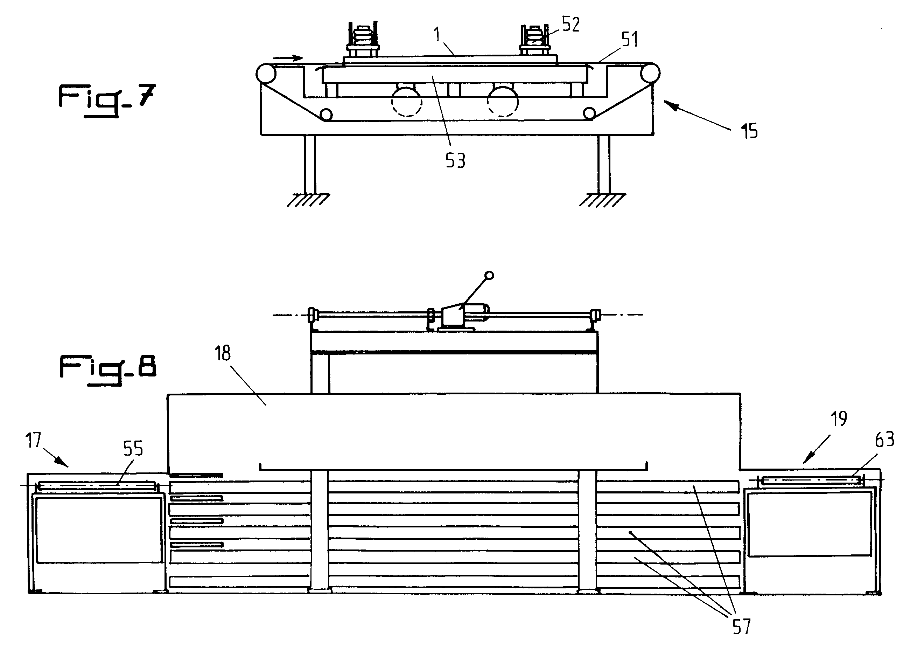

Le poste 14 de coulée et d'épandage du produit synthétique mélangé à la résine est constitué, comme le montre la figure 5 des dessins annexés, par une trémis 35 de réception et de mélange du produit synthétique pourvue à sa partie inférieure d'un clapet de fermeture 36 et reliée par ladite partie inférieure à un dispositif de transfert et de mélange 37 comportant une vis d'extrusion qui est prolongée dans une chemise de mélange 38 avec la résine, ladite chemise 38 débouchant au-dessus d'un godet 39 de déversement du produit mélangé dans les moules 1 (figure 6) et par un conteneur de résine 40 relié, par l'intermédiaire d'une pompe de transfert 42 et d'un flexible 43 à une chambre annulaire 41 d'injection de résine dans la chemise 38 et par un convoyeur 47 de support et de déplacement des moules 1 sous le godet 39.

La trémis 35, ainsi que le dispositif de transfert et de mélange 37 avec la chemise de mélange 38 et le godet 39, est avantageusement montée, au moyen de roues à gorge 44 à entraînement par au moins un moteur indépendant 45, sur des rails 46, de manière à pouvoir être déplacée transversalement au convoyeur 47.

Le convoyeur 47 est constitué par deux chaînes de transport parallèles entre lesquelles est monté, sur le châssis de support, un dispositif de pesée 48 déplaçable verticalement en position de service et hors service, au moyen de vérins 49, l'actionnement de ces vérins étant réalisé par l'intermédiaire d'au moins un détecteur de présence du moule en position de réception du produit synthétique. Dans cette position, la trémis 35 avec ses accessoires est déplacée en direction du convoyeur 47, au-dessus du moule 1 à remplir, puis la vis d'extrusion du dispositif de transport et de mélange 37, ainsi que la pompe de transfert 32, sont actionnées afin de délivrer une dose de produit dans le godet 39 équivalente au volume nécessaire au remplissage d'un moule 1, ladite dose étant alors déversée au moyen dudit godet 39 dans le moule 1, sous la surveillance du dispositif de pesée 48 qui arrête le déversement dès atteinte d'un poids prédéterminé et qui s'escamote alors sous les chaînes du convoyeur 47 et délivre un signal d'avance dudit convoyeur 47 d'une longueur correspondant à un moule.

Le convoyeur 47 (figure 6) est muni, en outre, de butées escamotables 50 de retenue des moules 1 après leur déplacement d'écartement de la position de remplissage en vue d'une répartition uniforme du produit automatique au moyen de raclettes montées sur le bras d'un robot (non représenté) ou manuelle.

Les moules sont transférés ensuite à un poste de vibration 15 (figure 7), qui est également constitué par un convoyeur 51 de réception des moules, pourvu, d'une part, de part et d'autre de son tapis transporteur, de pinces d'ablocage 52 pneumatiques ou hydrauliques, réglables en écartement, et, d autre part, sous ledit tapis, d'un plateau vibrant 53 présentant une plage de fréquences de vibrations comprises entre 50 Hz et 100 Hz et dont l'entraînement est réalisé par deux vibreurs en opposition.

A ce poste 15, le produit synthétique réparti dans le moule subit une vibration verticale le compactant et garantissant une répartition optimale dans le moule 1.

A la sortie du poste de vibration 15, les moules passent sur un poste 16 de travail intermédiaire et de contrôle du remplissage constitué par un convoyeur 54 dont l'actionnement peut être commandé au moyen d'un pupitre 54' .

A ce poste 16, un opérateur vérifie le remplissage des moules et il peut éventuellement être prévu un dispositif d'insolation infra-rouge destiné à réaliser une prépolymérisation du béton synthétique.

Le poste d'accumulation 17 consiste en un convoyeur 55 à rouleaux motorisés entre lesquels sont disposés, à intervalles réguliers correspondant à une longueur de moule 1, des détecteurs de présence (non représentés), ainsi que des butées d'écartement (non représentées) et des taquets 56 entraînés par des chaines dans une direction parallèle auxdits rouleaux. Ainsi, au fur et à mesure de l'arrivée des moules 1 sur le convoyeur 55, les détecteurs déterminent la présence desdits moules, actionnent les butées d'arret et coupent l'alimentation des rouleaux motorisés. Les taquets 56 peuvent alors être déplacés au moyen de leur chaîne d'entraînement afin de pousser les moules 1 en direction du local de polymérisation 18 (figures 8 à 10).

Ce dernier se présente sous forme d'une enceinte munie, sur deux côtés opposés, respectivement d'une ouverture d'introduction et d'une ouverture de sortie des moules 1 et renfermant des plateaux horizontaux de stockage 57, parallèles et superposés, déplaçables verticalement au moyen de deux dispositifs identiques de manutention à câble 58 et à contrepoids 59, lesdits plateaux 57 étant guidés par des galets 60 sur des poteaux 61 de support des dispositifs de manutention. Ces derniers permettent de déplacer les plateaux 57 verticalement devant les postes 17 d'accumulation et 19 de sortie.

Les plateaux 57 sont constitués chacun par un assemblage de profilés transversaux de support des moules 1 et de profilés longitudinaux formant l'infrastructure desdits profilés transversaux et reliés à des poutres transversales solidaires des câbles 58 et de la chape des galets 60, les profilés de support des moules étant pourvus à leurs extrémités d'un revêtement de glissement en matière synthétique et entre lesdites extrémités de roulettes de support.

Ainsi, les moules 1 qui sont introduits sur les plateaux 57 glissent d'abord relativement facilement sur les extrémités revêtues de matière synthétique, puis roulent sur les roulettes de support, de sorte que leur mise en place du côté du convoyeur 55 est facilitée tout en évitant un retour accidentel par roulement, le revêtement en matière synthétique réalisant un léger freinage.

Chaque plateau 57 est rempli d'un certain nombre, prédéterminé, de rangées de moules, puis est déplacé d'un pas vers le haut, afin de procéder au remplissage du plateau suivant.

Après remplissage de l'ensemble des plateaux 57, ces derniers sont ramenés dans leur position de départ et la mise en place de la rangée suivante de moules 1 au moyen du poste d'accumulation 17 entraîne la sortie d'un nombre correspondant de moules sur le poste 19 de réception des moules 1 avec les plaques obtenues.

Le local 18 est pourvu, en outre, d'un groupe 62 de chauffage et d'extraction monté sur l'enceinte et comportant, d'une part, des radiateurs électriques antidéflagrants destinés à assurer dans ladite enceinte une température comprise entre 20°C et 25°C par régulation au moyen d'un thermostat et, d'autre part, un extracteur d'air. Ce dernier est destiné à évacuer les gaz se dégageant lors de la polymérisation des produits synthétiques entrant dans la composition du béton de résine.

Le poste 19 de réception des moules avec les plaques obtenues est constitué par un convoyeur 63 à rouleaux motorisés présentant un léger décalage par rapport à la perpendiculaire au local 18 et par des détecteurs (non représentés) de présence de moules, ainsi que, en aval du convoyeur 63, d'un détecteur de présence de vide, les rouleaux motorisés conférant aux moules 1 une vitesse linéaire inférieure à celle du dispositif de réception situé en aval. Le montage oblique des rouleaux motorisés permet un détachement aisé des moules 1 des plateaux 57 et les différents détecteurs sont destinés à assurer, d'une part, une autorisation de sortie des moules du local 18 et, d'autre part, un départ desdits moules vers le poste situé en aval.

Le poste 20 de démoulage des plaques est un poste manuel constitué par un convoyeur 64, dont l'entraînement peut être commandé au moyen d'un pupitre 65. Ce poste 20 nécessite donc la présence d'un opérateur qui extrait les plaques obtenues des moules 1 pour les transférer soit sur un convoyeur d'alimentation d'un poste de transformation en aval, soit vers un poste de stockage 69.

Selon une variante de réalisation de l'invention, ce poste 20 peut également être sous forme d'un poste automatique coopérant avec un robot manipulateur de prise des plaques obtenues dans les moules et de transfert de ces plaques à un poste de transformation en aval ou à un poste de stockage 69.

Le dispositif conforme à l'invention peut également être équipé, comme le montre la figure 1, d'un poste 66 de rainurage sur lequel les plaques 1' obtenues sont alignées au moyen d'un guide, puis amenées sous une rainureuse 67 montée sur un châssis 68 et décrivant le pourtour des plaques 1' qui sont maintenues soit par aspiration, soit au moyen d'un dispositif applicateur central actionné par un vérin et également monté sur le châssis 68.

Enfin, les différents moyens de commande et d'actionnement, ainsi que les détecteurs, sont reliés à un automate programmable central de commande 70 gérant les différents déplacements, ainsi que le remplissage des moules, le temps de vibration de ces derniers et leur temps de séjour dans le local de polymérisation 18.

Grâce à l'invention, il est possible de réaliser des plaques de parement de façades ou de revêtement de sols, ou autres, présentant un fini de surface brillant et éventuellement granité, ainsi que des bords arrondis, également à surface brillante, ne nécessitant aucune opération ultérieure de finition.

En outre, il est également possible de munir ces plaques de rainures périphériques en vue de leur montage en vêture extérieure.

Le procédé conforme à l'invention permet ainsi l'obtention de plaques de grande dimension et d'un prix de revient relativement faible.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, défini par les revendications

## Revendications

1. Procédé de réalisation de plaques de parement de façades ou de revêtement de sols, ou autres, en matière synthétique, caractérisé en ce qu'il consiste essentiellement à dépoussiérer par aspiration un moule (1) monté sur une table vibrante (2), à découper un film (4) en matière synthétique, à savoir en un polyester tel que le térephtalate de polyéthylène, dont les dimensions excèdent celles du moule (1) augmentées de la hauteur des bords (3) de ce dernier, à poser et à centrer le film (4) dans le moule (1) en laissant reposer ses bords sur les bords (3) du moule (1), puis à joindre lesdits bords aux coins au moyen de pinces (5), à effectuer un nouveau contrôle d'absence de poussières ou autres sous le film (4), à conformer ensuite les arêtes (9) au niveau du fond du moule (1) au moyen d'un outil à bout arrondi, à réaliser alors une coulée d'un mortier, comportant un mélange à sec d'un produit synthétique, de méthacrylate de méthyle et d'un catalyseur, au moyen d'une vis doseuse de malaxage dans le moule (1), à épandre le mortier dans le moule (1) au moyen d'une spatule, puis à vibrer pendant environ une minute le moule (1) avec son contenu au moyen de la table (2), à démonter le moule (1) rempli de la table (2), à le transférer dans une chambre climatisée à une température comprise entre 25°C et 30°C et à laisser polymériser le mortier pendant environ 30 minutes, puis à démouler la plaque obtenue et à retirer sur sa face apparente (6) le film (4) de matière synthétique.

2. Dispositif pour la mise en oeuvre du procédé suivant la revendication 1, caractérisé en ce qu'il est essentiellement constitué par un moule (1) monté par bridage (10) sur une table vibrante (2) et présentant des bords latéraux d'appui (3), par un film (4) en matière synthétique, à savoir en un polyester tel que le térephtalate de polyéthylène, et par des pinces (5) de jonction desdits bords du film (4) au droit des coins du moule (1).

3. Dispositif, suivant la revendication 2, caractérisé en ce que le film (4) présente une épaisseur comprise entre 20 microns et 40 microns, de préférence une épaisseur de 22 microns ou de 33 microns.

4. Dispositif, suivant la revendication 2 pour la mise en oeuvre du procédé suivant la revendication 1, caractérisé en ce qu'il comporte une pluralité de moules (1) et en ce qu'il est constitué par un poste (11) de nettoyage automatique de moules (1), par un poste (12) de mise en place d'un film en matière synthétique, à savoir en un polyester tel que le térephtalate de polyéthylène, par un dispositif (13) de régularisation du transfert des moules (1) et de dépôt éventuel d'inserts ou analogues, par un poste (14) de coulée et d'épandage du mortier, comportant un mélange à sec d'un produit synthétique, de méthacrylate de méthyle et d'un catalyseur, par un poste (15) de vibration des moules (1) remplis, par un poste (16) de travail intermédiaire et de contrôle du remplissage des moules (1), par un poste (17) d'accumulation des moules (1) relié à un local (18) de polymérisation du mortier qu'ils renferment et introduisant lesdits moules (1) dans ledit local (18), par un poste (19) de réception des moules (1) avec les plaques obtenues à la sortie du local de polymérisation (18) et par un poste de démoulage (20), un ensemble de convoyeurs transportant les moules (1) d'un poste à l'autre, l'ensemble de ces postes étant reliés mécaniquement et leur commande étant automatisée.

5. Dispositif, suivant la revendication 4, caractérisé en ce que le poste (11) de nettoyage automatique des moules est constitué par une buse d'aspiration transversale (21) montée à l'extrémité d'un bras articulé (22) d'un automate et raccordée par un flexible (23) à un dispositif d'aspiration, ladite buse (21) étant pourvue, de part et d'autre de son ouverture d'aspiration, de brosses (24) de nettoyage du fond des moules (1) disposés sur un premier convoyeur (27), une brosse fixe (25) étant montée, en outre, sur le châssis du convoyeur (27) devant la buse (21) vue dans le sens de translation des moules (1), de manière à s'appuyer sur les bords desdits moules (1).

6. Dispositif, suivant la revendication 5, caractérisé en ce que les éléments constitutifs du bras articulé (22) sont reliés entre eux à leur extrémité libre au moyen d'un vérin (26) réalisant la montée et la descente de la buse (21), dont la largeur correspond à la largeur des moules (1).

7. Dispositif, suivant la revendication 5, caractérisé en ce que les brosses (24) de nettoyage du fond du moule sont des brosses à poils relativement souples, tandis que la brosse (25) s'appuyant sur les bords des moules (1) est une brosse à poils durs.

8. Dispositif, suivant l'une quelconque des revendications 5 à 7, caractérisé en ce que le poste (11) est pourvu, en outre, d'une part, au-dessus de ses bords longitudinaux, de rives (28) de guidage et de centrage des moules (1) et, d'autre part, d'une cellule (29) de détection de l'arrivée du moule au droit de la buse (21), cette cellule commandant la descente de ladite buse qui est pourvue, sur sa face avant, d'un contact (30) détectant son arrivée contre le bord arrière du moule (1) à nettoyer et provoquant l'arrêt du convoyeur (27), actionnant la remontée de la buse (21) au moyen du vérin (26) après une temporisation, l'arrivée en fin de course de remontée de la buse (21) autorisant le redémarrage du convoyeur (27).

9. Dispositif, suivant la revendication 4, caractérisé en ce que le poste (12) de mise en place d'un film en matière synthétique est constitué par un convoyeur (30) disposé dans le prolongement du convoyeur (27) et dont l'entraînement est interrompu au moyen d'un détecteur actionné par le moule (1), par un dispositif (31) de découpage à la longueur du film en matière synthétique, ainsi que par un moyen (32) de commande du redémarrage du convoyeur (30) à actionnement manuel.

10. Dispositif, suivant la revendication 9, caractérisé en ce que le découpage, la prise, le transfert et la mise en place du film en matière synthétique sont réalisés de manière automatique par disposition d'un automate entre le dispositif de découpage (31) et le convoyeur (30), ledit automate étant pourvu d'un caisson d'aspiration présentant des dimensions égales à celles de la plaque à obtenir, donc au volume intérieur du moule (1), les pinces de fixation du film aux coins étant posées manuellement ou se présentant sous forme de pinces à actionnement mécanique au moyen d'actionneurs solidaires du bras de support du caisson d'aspiration.

11. Dispositif, suivant la revendication 4, caractérisé en ce que le dispositif (13) de régularisation du transfert des moules et de dépôt éventuel d'inserts ou analogues est également constitué par un convoyeur (33) et par un moyen (34) de commande de l'entraînement de ce convoyeur (33), le moyen (34) étant combiné avec un dispositif de détection de présence de moules commandant, soit l'arrêt du convoyeur (33), dont le redémarrage est commandé par le moyen (34), soit un fonctionnement cyclique dudit convoyeur (33) par coopération avec un automate programmable de contrôle en fonction de l'occupation des convoyeurs disposés en aval.

12. Dispositif, suivant la revendication 4, caractérisé en ce que le poste (14) de coulée et d'épandage du mortier comportant un mélange à sec d'un produit synthétique, de méthacrylate de méthyle et d'un catalyseur, est constitué par une trémie (35) de réception et de mélange du mortier, pourvue à sa partie inférieure d'un clapet de fermeture (36) et reliée par ladite partie inférieure à un dispositif de transfert et de mélange (37) comportant une vis d'extrusion qui est prolongée dans une chemise de mélange (38) avec le méthacrylate de méthyle et le catalyseur, ladite chemise (38) débouchant au-dessus d'un godet (39) de déversement du mortier mélangé dans les moules (1) et par un conteneur de méthacrylate de méthyle et de catalyseur (40) relié, par l'intermédiaire d'une pompe de transfert (42) et d'un flexible (43), à une chambre annulaire (41) d'injection dans la chemise (38) et par un convoyeur (47) de support et de déplacement des moules (1) sous le godet (39).

13. Dispositif, suivant la revendication 12, caractérisé en ce que la trémie (35), ainsi que le dispositif de transfert et de mélange (37) avec la chemise de mélange (38) et le godet (39), sont montés, au moyen de roues à gorge (44) à entraînement par au moins un moteur indépendant (45), sur des rails (46), de manière à pouvoir être déplacés transversalement au convoyeur (47).

14. Dispositif, suivant l'une quelconque des revendications 12 et 13, caractérisé en ce que le convoyeur (47) est constitué par deux chaînes de transport parallèles entre lesquelles est monte, sur le châssis de support, un dispositif de pesée (48) déplaçable verticalement en position de service et hors service, au moyen de vérins (49), l'actionnement de ces vérins étant réalise par l'intermédiaire d'au moins un détecteur de présence du moule en position de réception du mortier.

15. Dispositif, suivant l'une quelconque des revendications 12 à 14, caractérisé en ce que le convoyeur (47) est muni, en outre, de butées escamotables (50) de retenue des moules (1) après leur déplacement d'écartement de la position de remplissage en vue d'une répartition uniforme automatique du mortier au moyen de raclettes montées sur le bras d'un robot ou manuelle.

16. Dispositif, suivant la revendication 4, caractérisé en ce que le poste de vibration (15), est constitué par un convoyeur (51) de réception des moules, pourvu, d'une part, de part et d'autre de son tapis transporteur, de pinces d'ablocage (52) pneumatiques ou hydrauliques, réglables en écartement, et, d'autre part, sous ledit tapis, d'un plateau vibrant (53) présentant une plage de fréquences de vibrations comprises entre 50 Hz et 100 Hz et dont l'entraînement est réalisé par deux vibreurs en opposition.

17. Dispositif, suivant la revendication 4, caractérisé en ce que le poste (16) de travail intermédiaire et de contrôle du remplissage est constitué par un convoyeur (54), dont l'actionnement est commandé au moyen d'un pupitre (54').

18. Dispositif, suivant la revendication 17, caractérisé en ce que le poste (16) est pourvu d'un dispositif d'insolation infra-rouge destiné à réaliser une prépolymérisation du béton synthétique.

19. Dispositif, suivant la revendication 4, caractérisé en ce que le poste d'accumulation (17) consiste en un convoyeur (55) à rouleaux motorisés entre lesquels sont disposés, à intervalles réguliers correspondant à une longueur de moule (1), des détecteurs de présence, ainsi que des butées d'écartement et des taquets (56) entraînés par des chaînes dans une direction parallèle auxdits rouleaux.

20. Dispositif, suivant la revendication 4, caractérisé en ce que le local de polymérisation (18) se présente sous forme d'une enceinte munie, sur deux côtés opposés, respectivement d'une ouverture d'introduction et d'une ouverture de sortie des moules (1) et renfermant des plateaux horizontaux de stockage (57), parallèles et superposés, déplaçables verticalement au moyen de deux dispositifs identiques de manutention à câble (58) et à contrepoids (59), lesdits plateaux (57) étant guidés par des galets (60) sur des poteaux (61) de support des dispositifs de manutention.

21. Dispositif, suivant la revendication 20, caractérisé en ce que les plateaux (57) sont constitués chacun par un assemblage de profilés transversaux de support des moules (1) et de profilés longitudinaux formant l'infrastructure desdits profilés transversaux et reliés à des poutres transversales solidaires des câbles (58) et de la chape des galets (60), les profilés de support des moules étant pourvus à leurs extrémités d'un revêtement de glissement en matière synthétique et entre lesdites extrémités de roulettes de support.

22. Dispositif, suivant l'une quelconque des revendications 20 et 21, caractérisé en ce que le local (18) est pourvu, en outre, d'un groupe (62) de chauffage et d'extraction monté sur l'enceinte et comportant, d'une part, des radiateurs électriques antidéflagrants destinés à assurer dans ladite enceinte une température comprise entre 20°C et 25°C par régulation au moyen d'un thermostat et, d'autre part, un extracteur d'air.

23. Dispositif, suivant la revendication 4, caractérisé en ce que le poste (19) de réception des moules avec les plaques obtenues est constitué par un convoyeur (63) à rouleaux motorisés présentant un léger décalage par rapport à la perpendiculaire au local (18) et par des détecteurs de présence de moules, ainsi que, en aval du convoyeur (63), d'un détecteur de présence de vide, les rouleaux motorisés conférant aux moules (1) une vitesse linéaire inférieure à celle du dispositif de réception situé en aval.

24. Dispositif, suivant la revendication 4, caractérisé en ce que le poste (20) de démoulage des plaques est un poste manuel constitué par un convoyeur (64), dont l'entraînement peut être commandé au moyen d'un pupitre (65).

25. Dispositif, suivant la revendication 4, caractérisé en ce que le poste (20) est sous forme d'un poste automatique coopérant avec un robot manipulateur de prise des plaques obtenues dans les moules et de transfert de ces plaques à un poste de transformation en aval ou à un poste de stockage (69).

26. Dispositif, suivant la revendication 4, caractérisé en ce qu'il est équipé, en outre, d'un poste (66) de rainurage sur lequel les plaques (1') obtenues sont alignées au moyen d'un guide, puis amenées sous une rainureuse (67) montée sur un châssis (68) et décrivant le pourtour des plaques (1') qui sont maintenues, soit par aspiration, soit au moyen d'un dispositif applicateur central actionné par un verin et également monté sur le châssis (68).

27. Dispositif, suivant l'une quelconque des revendications 4 à 26, caractérise en ce que les différents moyens de commande et d'actionnement, ainsi que les détecteurs, sont reliés à un automate programmable central de commande (70) gérant les différents déplacements, ainsi que le remplissage des moules, le temps de vibration de ces derniers et leur temps de séjour dans le local de polymérisation (18).

28. Plaque obtenue par application du procédé suivant la revendication 1 au moyen du dispositif suivant l'une quelconque des revendications 2 à 27, caractérisée en ce qu'elle est constituée en une matière synthétique à base de méthacrylate de méthyle et présente une face apparente (6) avec un fini de surface brillant et des bords arrondis (7).

29. Plaque, suivant la revendication 28, caractérisée en ce qu'elle est munie, sur sa face arrière, au moins près de ses côtés correspondant à ses parties supérieure et inférieure, ou sur toute sa périphérie, d'inserts (8) de fixation sur des éléments d'infrastructure.

30. Plaque, suivant l'une quelconque des revendications 28 et 29, caractérisée en ce que la face apparente de la plaque (1) présente un aspect granité.

## Claims

1. Process for producing facade-facing or floor-covering panels or the like, of synthetic material, characterized in that it essentially consists in removing dust by suction from a mould (1) mounted on a vibrating table (2), in cutting a film (4) of synthetic material, namely of a polyester such as polyethyleneterephthalate, the dimensions of which exceed those of the mould (1) increased by the height of the edges (3) of this mould, in laying and centring the film (4) in the mould (1), allowing its edges to rest on the edges (3) of the mould (1), then in joining the said edges at the corners using clamps (5), in performing a further operation of ensuring that there is no dust or the like present under the film (4), in then shaping the side edges (9) at the bottom of the mould (1) using a tool with a rounded end, in then pouring into the mould (1) using a metering mixing screw, a mortar containing a dry mix of a synthetic product, of methyl methacrylate and of a catalyst, in spreading the mortar out in the mould (1) using a spatula, then in vibrating the mould (1) with its contents for about 1 minute by means of the table (2), in taking the filled mould (1) off the table (2), in transferring it into a climate-controlled chamber at a temperature of between 25°C and 30°C and in leaving the mortar to polymerize for about 30 minutes, then in de-moulding the panel obtained and in removing the film (4) of synthetic material from its visible face (6).

2. Device for implementing the process according to Claim 1, characterized in that it essentially consists of a mould (1) mounted by clamping (10) on a vibrating table (2) and having lateral edges (3) against which a film (4) of synthetic material, namely of a polyester such as polyethylene terephthalate can rest, and of clamps (5) for joining the said edges of the film (4) together at the corners of the mould (1).

3. Device according to Claim 2, characterized in that the film (4) has a thickness of between 20 microns and 40 microns, preferably a thickness of 22 microns or of 33 microns.

4. Device according to Claim 2 for the implementation of the process according to Claim 1, characterized in that it comprises a number of moulds (1) and in that it consists of a station (11) for automatically cleaning the moulds (1), a station (12) for applying a film of synthetic material, namely of a polyester such as polyethylene terephthalate, a device (13) for regulating the transfer of the moulds (1) and possibly depositing inserts or the like, a station (14) for pouring and spreading-out the mortar, containing a dry mix of a synthetic product, of methyl methacrylate and of a catalyst, a station (15) for vibrating the filled moulds (1), an intermediate workstation (16) for checking the filling of the moulds (1), a station (17) for accumulating the moulds (1) and connected to a site (18) for polymerizing the mortar they contain and introducing the said moulds (1) into the said site (18), a station (19) for receiving the moulds (1) with the panels obtained at the exit from the polymerization site (18) and a de-moulding station (20), a series of conveyors conveying the moulds (1) from one station to the next, all of these stations being connected mechanically and their control being automated.

5. Device according to Claim 4, characterized in that the station (11) for automatically cleaning the moulds consists of a transverse suction nozzle (21) mounted at the end of an articulated arm (22) of an automaton and connected by a flexible hose (23) to a suction device, the said nozzle (21) being provided, on each side of its suction opening, with brushes (24) for cleaning the bottom of the moulds (1) placed on a first conveyor (27), there also being a stationary brush (25) mounted on the chassis of the conveyor (27) in front of the nozzle (21) when viewed in the direction of translation of the moulds (1), so as to press on the edges of the said moulds (1).

6. Device according to Claim 5, characterized in that the elements that make up the articulated arm (22) are joined together at their free end by means of a ram (26) which raises and lowers the nozzle (21), the width of which corresponds to the width of the moulds (1).

7. Device according to Claim 5, characterized in that the brushes (24) for cleaning the bottom of the mould are brushes with relatively soft bristles, whereas the brush (25) pressing against the edges of the moulds (1) is a brush with stiffer bristles.

8. Device according to any one of Claims 5 to 7, characterized in that the station (11) is also provided, on the one hand, above its longitudinal edges, with banks (28) for guiding and centring the moulds (1) and, on the other hand, with a cell (29) for detecting the arrival of the mould in line with the nozzle (21), this cell controlling the lowering of the said nozzle which is provided, on its front face, with a contact (30) detecting that it has come against the rear edge of the mould (1) to be cleaned and causing the conveyor (27) to stop, actuating the raising of the nozzle (21) by means of the ram (26) after a time delay, the nozzle (21) reaching the end of its upwards travel allowing the conveyor (27) to start again.

9. Device according to Claim 4, characterized in that the station (12) for applying a film of synthetic material consists of a conveyor (30) placed in extension of the conveyor (27) and the drive to which is interrupted by means of a detector actuated by the mould (1), a device (31) for cutting the film of synthetic material to length, and a manually actuated means (32) of re-starting the conveyor (30).

10. Device according to Claim 9, characterized in that the cutting, gripping, transfer and application of the film of synthetic material are performed automatically by arranging an automaton between the cutting device (31) and the conveyor (30), the said automaton being fitted with a suction box with dimensions equal to those of the panel to be obtained, and therefore to the interior volume of the mould (1), the clamps for fastening the film at the corners being applied manually or being in the form of clamps that are actuated mechanically by means of actuators integral with the arm that supports the suction box.

11. Device according to Claim 4, characterized in that the device (13) for regulating the transfer of the moulds and the possible depositing of inserts or the like also consists of a conveyor (33) and a means (34) of controlling the drive to this conveyor (33), the means (34) being combined with a device for detecting the presence of moulds commanding either the stopping of the conveyor (33), the re-starting of which is brought about by the means (34), or cyclic operation of the said conveyor (33) by interaction with a programmable automaton for control as a function of the occupation of the conveyors situated downstream.

12. Device according to Claim 4, characterized in that the station (14) for pouring and spreading-out the mortar containing a dry mix of a synthetic product, of methyl methacrylate and of a catalyst, consists of a hopper (35) that receives and mixes the mortar, and is fitted at its bottom with a closure flap (36) and is connected by the said bottom to a transfer and mixing device (37) comprising an extrusion screw which is extended into a sleeve (38) for mixing with the methyl methacrylate and the catalyst, the said sleeve (38) emerging above a bucket (39) for tipping the mixed mortar into the moulds (1), and a methyl methacrylate and catalyst container (40) connected, via a transfer pump (42) and a flexible hose (43) to an annular chamber (41) for injecting into the sleeve (38) and a conveyor (47) for supporting the moulds (1) and displacing them under the bucket (39).

13. Device according to Claim 12, characterized in that the hopper (35) and the transfer and mixing device (37) with the mixing sleeve (38) and the bucket (39) are mounted, via grooved wheels (44) to be driven by at least one independent motor (45), on rails (46) so that they can be displaced transversely to the conveyor (47).

14. Device according to either one of Claims 12 and 13, characterized in that the conveyor (47) consists of two parallel transport lines between which there is mounted, on the support chassis, a weighing device (48) that can be displaced vertically into a service position and out of a service position, by means of rams (49), these rams being actuated via at least one detector that detects whether a mould is in a position for receiving mortar.

15. Device according to any one of Claims 12 to 14, characterized in that the conveyor (47) is also equipped with retractable stops (50) for restraining the moulds (1) after they have moved away from the filling position, with the purpose of automatically spreading the mortar out uniformly by means of scrapers mounted on the arm of a robot, or manually.

16. Device according to Claim 4, characterized in that the vibrating station (15) consists of a conveyor (51) for receiving the moulds, equipped, on the one hand, on each side of its conveyor belt, with pneumatic or hydraulic locking clamps (52) with adjustable spacing and, on the other hand, under the said belt, with a vibrating plate (53) which has a range of frequencies for vibration of between 50 Hz and 100 Hz and which is driven by two vibrators in opposition.

17. Device according to Claim 4, characterized in that the intermediate work station (16) for checking the filling consists of a conveyor (54), the actuation of which is controlled by a control desk (54').

18. Device according to Claim 17, characterized in that the station (16) is equipped with an infra-red radiation device intended to prepolymerize the synthetic concrete.

19. Device according to Claim 4, characterized in that the accumulation station (17) consists of a conveyor (55) with motorized rolls between which there are arranged, at regular intervals corresponding to a length of a mould (1), presence detectors, as well as spacer stops and lugs (56) driven by chains in a direction parallel to the said rolls.

20. Device according to Claim 4, characterized in that the polymerization site (18) is in the form of a chamber equipped, on two opposite sides, one with an inlet opening and the other with an exit opening for the moulds (1) and containing parallel and superposed horizontal storage plates (57) that can be moved vertically by means of two identical cable(58)-and-counter-weight(59)-operated handling devices, the said plates (57) being guided by rollers (60) on posts (61) that support the handling devices.

21. Device according to Claim 20, characterized in that the plates (57) each consist of an assembly of transverse sections for supporting the moulds (1) and of longitudinal sections forming the infrastructure of the said transverse sections and connected to transverse girders secured to the cables (58) and to the clevis mount of the rollers (60), the mould-support sections being equipped at their ends with a sliding coating made of a synthetic material, and between the said ends, with support rollers.

22. Device according to either of Claims 20 and 21, characterized in that the site (18) is also fitted with a heating and extraction unit (62) mounted on the chamber and comprising, on the one hand, anti-explosion electric radiators intended to ensure a temperature of between 20°C and 25°C within the said chamber by regulating by means of a thermostat and, on the other hand, an air extractor.

23. Device according to Claim 4, characterized in that the station (19) for receiving the moulds with the panels obtained consists of a conveyor (63) with motorized rolls offset slightly with respect to the perpendicular to the site (18) and mould-presence detectors as well as, downstream of the conveyor (63), a gap detector, the motorized rolls imparting to the moulds (1) a linear speed that is lower than that of the reception device located downstream.

24. Device according to Claim 4, characterized in that the station (20) for de-moulding the panels is a manual station consisting of a conveyor (64) the drive of which can be controlled from a control desk (65).

25. Device according to Claim 4, characterized in that the station (20) is in the form of an automatic station interacting with a handling robot for picking up the panels obtained from the molds and transferring these panels to a conversion station downstream or to a storage station (69).

26. Device according to Claim 4, characterized in that it is also equipped with a grooving station (66) at which the panels (1') obtained are aligned using a guide then conveyed under a groove cutter (67) mounted on a chassis (68) and describing the perimeter of the panels (1') which are held, either by suction or by means of a central applicator device actuated by a ram and also mounted on the chassis (68).

27. Device according to any one of Claims 4 to 26, characterized in that the various control and actuation means, and the detectors, are connected to a programmable central automaton (70) managing the various displacements, and the filling of the moulds, the time for which these are vibrated and their residence time in the polymerization site (18).

28. Panel obtained by an application of the method according to Claim 1 by means of the device according to any one of Claims 2 to 27, characterized in that it consists of a synthetic material based on methyl methacrylate and has a visible face (6) with a bright surface finish and rounded edges (7).

29. Panel according to Claim 28, characterized in that it is equipped, on its rear face, at least close to its sides that correspond to its top and bottom, or around its entire periphery, with inserts (8) for attaching to elements in the infrastructure.

30. Panel according to either one of Claims 28 and 29, characterized in that the visible face of the panel (1) has a granite-like appearance.

## Patentansprüche

1. Verfahren zur Herstellung von Fassadenverkleidungs- oder Bodenbelagplatten oder dergleichen aus Kunststoff, dadurch gekennzeichnet, daß es im wesentlichen darin besteht, eine auf einem Vibriertisch (2) montierte Form (1) durch Saugen zu entstauben, eine Folie (4) aus Kunststoff, und zwar aus einem Polyester wie dem Polyethylenterephthalat, zuzuschneiden, deren Abmessungen diejenigen der Form (1), vermehrt um die Höhe der Ränder (3) dieser letzteren, übersteigen, die Folie (4) in der Form (1) anzuordnen und zu zentrieren, wobei man ihre Ränder auf den Rändern (3) der Form (1) ruhen läßt, dann diese Ränder an den Ecken mittels Klemmen (5) zu verbinden, erneut die Abwesenheit von Stäuben oder dergleichen unter der Folie (4) zu überprüfen, anschließend mittels einem Werkzeugs mit abgerundetem Ende die Kanten (9) in Höhe des Bodens der Form (1) zu formen, dann mittels einer Knet-Dosierschnecke einen Mörtel, der eine Trockenmischung aus einem synthetischen Produkt, Methylmethacrylat und einem Katalysator umfaßt, in die Form (1) zu gießen, den Mörtel mittels eines Spachtels in der Form (1) zu verteilen, dann während etwa einer Minute die Form (1) mit ihrem Inhalt mittels des Tisches (2) zu rütteln, die gefüllte Form (1) vom Tisch (2) zu demontieren, sie in eine Kammer zu überführen, die auf eine Temperatur zwischen 25°C und 30°C klimatisiert ist, und den Mörtel während etwa 30 Minuten polymerisieren zu lassen, dann die erhaltene Platte zu entformen und die Kunstgtoffolie (4) auf ihrer Sichtfläche (6) abzuziehen.

2. Vorrichtung zur Durchführung des Verfahrens nach Anspruch 1, dadurch gekennzeichnet, daß sie im wesentlichen aus einer Form (1), die durch Festklammern (10) auf einem Vibriertisch (2) montiert ist und seitliche Stützränder (3) aufweist, aus einer Kunststoffolie (4), und zwar aus einem Polyester wie dem Polyethylenterephthalat, und aus Klemmen (5) zur Verbindung der Ränder der Folie (4) rechtwinklig zu den Ecken der Form (1) besteht.

3. Vorrichtung nach Anspruch 2, dadurch gekennzeichnet, daß die Folie (4) eine Dicke zwischen 20 Mikrometern und 40 Mikrometern, vorzugsweise eine Dicke von 22 Mikrometern oder 33 Mikrometern, aufweist.

4. Vorrichtung nach Anspruch 2 zur Durchführung des Verfahrens nach Anspruch 1, dadurch gekennzeichnet, daß sie eine Mehrzahl von Formen (1) umfaßt und daß sie aus einer Station (11) zur automatischen Reinigung der Formen (1), aus einer Station (12) zur Anordnung einer Kunststoffolie, und zwar aus einem Polyester wie dem Polyethylenterephthalat, aus einer Vorrichtung (13) zur Regelung des Transports der Formen (1) und zur eventuellen Ablage von Eingätzen oder ähnlichem, aus einer Station (14) zum Gießen und Verteilen des Mörtels, der eine Trockenmischung aus einem synthetischen Produkt. Methylmethacrylat und einem Katalysator umfaßt, aus einer Station (15) zum Rütteln der gefüllten Formen (1), aus einer Station (16) zur Zwischenbearbeitung und Prüfung der Füllung der Formen (1), aus einer Station (17) zum Sammeln der Formen (1), die mit einem Raum (18) zur Polymerisation des in ihnen enthaltenen Mörtels verbunden ist und die Formen (1) dem Raum (18) zuführt, aus einer Station (19) zur Entgegennahme der Formen (1) mit den erhaltenen Platten am Ausgang des Polymerisationsraumes (18) und aus einer Entformungsstation (20) besteht, wobei eine Gruppe von Förderern die Formen (1) von einer Station zur anderen transportiert, die Gesamtheit dieser Stationen mechanisch verbunden ist und ihre Steuerung automatisiert ist.

5. Vorrichtung nach Anspruch 4, dadurch gekennzeichnet, daß die Station (11) zur automatischen Reinigung der Formen aus einer quergerichteten Saugdüse (21) besteht, die am Ende eines Gelenkarmes (22) eines Automaten montiert ist und durch einen Schlauch (23) mit einer Saugvorrichtung verbunden ist, wobei die Düse (21) auf beiden Seiten ihrer Saugöffnung mit Bürsten (24) zur Reinigung des Bodens der auf einem ersten Förderer (27) angeordneten Formen (1) versehen ist, wobei außerdem vor der Düse (21), in Richtung der Verschiebung der Formen (1) gesehen, eine feststehende Bürste (25) so an dem Rahmen des Förderers (27) montiert ist, daß sie auf die Ränder dieser Formen (1) gedrückt wird.

6. Vorrichtung nach Anspruch 5, dadurch gekennzeichnet, daß die Elemente, die den Gelenkarm (22) bilden, an ihrem freien Ende mittels eines Zylinders (26) miteinander verbunden sind, der das Heben und senken der Düse (21) durchführt, deren Breite der Breite der Formen (1) entspricht.

7. Vorrichtung nach Anspruch 5, dadurch gekennzeichnet, daß die Bürsten (24) zur Reinigung des Bodens der Form Bürsten mit relativ weichen Borsten sind, während die Bürste (25), die auf die Ränder der Formen (1) gedrückt wird (1), eine Bürste mit harten Borsten ist.

8. Vorrichtung nach einem der Ansprüche 5 bis 7, dadurch gekennzeichnet, daß die Station (11) außerdem einerseits auf ihren Längsrändern mit Kanten (28) zur Führung und Zentrierung der Formen (1) und andererseits mit einer Zelle (29) zur Erfassung des Eintreffens der Form rechtwinklig zur Düse (21) ausgestattet ist, wobei diese Zelle das Absenken der Düse steuert, die an ihrer Vorderseite mit einem Kontakt (30) versehen ist, der ihr Eintreffen an dem hinteren Rand der zu reinigenden Form (1) erfaßt und das Anhalten des Förderers (27) bewirkt und nach einer Zeitverzögerung das Anheben der Düse (21) mittels des Zylinders (26) auslöst, wobei das Eintreffen der Düse (21) in der Endstellung des Anhebens den Wiederanlauf des Förderers (27) gestattet.

9. Vorrichtung nach Anspruch 4, dadurch gekennzeichnet, daß die Station (12) zur Anordnung einer Kunststoffolie aus einem Förderer (30), der in der Verlängerung des Förderers (27) angeordnet ist und dessen Antrieb mittels eines von der Form (1) betätigten Detektors unterbrochen wird, aus einer Vorrichtung (31) zum Zuschneiden der Kunststoffolie sowie aus einem Mittel (32) zur Steuerung des Wiederanlaufs des Förderers (30) mit manueller Betätigung besteht.

10. Vorrichtung nach Anspruch 9, dadurch gekennzeichnet, daß das Zerschneiden, das Ergreifen, die Überführung und die Anordnung der Kunststoffolie durch Anordnung eines Automaten zwischen der Schneidvorrichtung (31) und dem Förderer (30) automatisch erfolgen, wobei dieser Automat mit einem Ansaugkasten versehen ist, der Abmessungen aufweist, die denen der herzustellenden Platte entsprechen, also dem Innenvolumen der Form (1), wobei die Klemmen zur Fixierung der Folie an den Ecken manuell angeordnet werden oder in Form von Klemmen vorliegen, die mittels Betätigungsorganen, welche mit dem Tragarm des Ansaugkastens fest verbunden sind, mechanisch betätigt werden.

11. Vorrichtung nach Anspruch 4, dadurch gekennzeichnet, daß die Vorrichtung (13) zur Regelung des Transports der Formen und zur eventuellen Ablage von Einsätzen oder ähnlichem ebenfalls aus einem Förderer (33) und aus einem Mittel (34) zur Steuerung des Antriebs dieses Förderers (33) besteht, wobei das Mittel (34) mit einer Vorrichtung zur Erfassung der Anwesenheit von Formen kombiniert ist, die entweder das Anhalten des Förderers (33), dessen Wiederanlauf von dem Mittel (34) gesteuert wird, oder einen zyklischen Betrieb dieses Förderers (33) durch Zusammenwirken mit einem programmierbaren Steuerautomaten in Abhängigkeit von der Auslastung der stromabwärtig angeordneten Förderer steuert.

12. Vorrichtung nach Anspruch 4, dadurch gekennzeichnet, daß die Station (14) zum Gießen und Verteilen des Mörtels, der eine Trockenmischung aus einem synthetischen Produkt, Methylmethacrylat und einem Katalysator umfaßt, aus einem Trichter (35) zur Aufnahme und Mischung des Mörtels, der an seinem unteren Teil mit einer Verschlußklappe (36) versehen ist und über diesen unteren Teil mit einer Förder- und Mischvorrichtung (37) verbunden ist, die eine Extrusionsschnecke enthält, welche sich in eine Zylinderbuchse zum Mischen (38) mit dem Methylmethacrylat und dem Katalysator erstreckt, wobei die Zylinderbuchse (38) über einem Gefäß (39) zum Ausschütten des gemischten Mörtele in die Formen (1) mündet, und aus einem Behälter für Methylmethacrylat und Katalysator (40), der mittels einer Förderpumpe (42) und eines Schlauches (43) mit einer ringförmigen Kammer (41) zur Injektion in die Zylinderbuchse (38) verbunden ist, und aus einem Förderer (47) zum Tragen und zur Verschiebung der Formen (1) unter das Gefäß (39) besteht.

13. Vorrichtung nach Anspruch 12, dadurch gekennzeichnet, daß der Trichter (35) sowie die Förder- und Mischvorrichtung (37) mit der Mischzylinderbuchse (38) und dem Gefäß (39) mittels Rillenrädern (44), die durch wenigstens einen unabhängigen Motor (45) angetrieben werden, auf Schienen (46) montiert sind, um quer zum Förderer (47) verschoben werden zu können.

14. Vorrichtung nach einem der Ansprüche 12 und 13, dadurch gekennzeichnet, daß der Förderer (47) aus zwei parallelen Transportketten besteht, zwischen denen auf dem Stützrahmen eine Wägevorrichtung (48) montiert ist, die mittels Zylindern (49) vertikal in die Betriebs- und Nichtbetriebsposition verschiebbar ist, wobei die Betätigung dieser Zylinder mit Hilfe wenigstens eines Detektors erfolgt, der die Anwesenheit der Form in der Position zur Aufnahme des Mörtels erfaßt.

15. Vorrichtung nach einem der Ansprüche 12 bis 14, dadurch gekennzeichnet, daß der Förderer (47) außerdem mit einziehbaren Anschlägen (50) zum Festhalten der Formen (1) nach ihrer Verschiebung zur Entfernung aus der Füllposition im Hinblick auf eine automatische gleichmäßige Verteilung des Mörtels mittels Schabern, die an dem Arm eines Roboters montiert sind oder handbetätigt werden, versehen ist.

16. Vorrichtung nach Anspruch 4, dadurch gekennzeichnet, daß die Rüttelstation (15) aus einem Förderer (51) zur Aufnahme der Formen besteht, der einerseits auf beiden Seiten seines Transportbandes mit pneumatischen oder hydraulischen Klemmen (52) zum Einspannen, die im Abstand verstellbar sind, und andererseits unter dem Band mit einer Vibrierplatte (53) versehen ist, die einen Schwingungsfrequenzbereich zwischen 50 Hz und 100 Hz aufweist und deren Antrieb durch zwei gegenüberliegende Vibratoren erfolgt.

17. Vorrichtung nach Anspruch 4, dadurch gekennzeichnet, daß die Station (16) zur Zwischenbearbeitung und Prüfung der Füllung aus einem Förderer (54) besteht, dessen Betätigung mittels eines Pultes (54') gesteuert wird.

18. Vorrichtung nach Anspruch 17, dadurch gekennzeichnet, daß die Station (16) mit einer Vorrichtung zur Infrarotbastrahlung versehen ist, die dazu bestimmt ist, eine Vorpolymerisation des synthetischen Betons durchzuführen.

19. Vorrichtung nach Anspruch 4, dadurch gekennzeichnet, daß die Sammelstation (17) aus einem Förderer (55) mit motorisierten Rollen, zwischen denen in gleichmäßigen Abständen, die der Länge einer Form (1) entsprechen, Anwesenheitsdetektoren angeordnet sind, sowie aus Abstandshaltern und Mitnehmern (56) besteht, die durch Ketten in einer Richtung parallel zu den Rollen angetrieben werden.

20. Vorrichtung nach Anspruch 4, dadurch gekennzeichnet, daß der Polymerisationsraum (18) in Form einer Kammer vorliegt, die auf zwei gegenüberliegenden Seiten jeweils mit einer Einführöffnung und einer Austrittsöffnung für die Formen (1) versehen ist und horizontale Platten zur Lagerung (57) enthält, die parallel und übereinander angeordnet sind und mittels zweier identischer Hebevorrichtungen mit Seil (58) und Gegengewicht (59) vertikal verschiebbar sind, wobei die Platten (57) durch Rollen (60) an Stützpfeilern (61) der Hebevorrichtungen geführt werden.

21. Vorrichtung nach Anspruch 20, dadurch gekennzeichnet, daß die Platten (57) jeweils aus einer Verbindung von Querprofilen zum Abstützen der Formen (1) und von Längsprofilen bestehen, welche den Unterbau der Querprofile bilden und mit Querträgern verbunden sind, die mit den Seilen (58) und der Gabel der Rollen (60) fest verbunden sind, wobei die Profile zum Abstützen der Formen an ihren Enden mit einer Gleitbeschichtung aus Kunststoff und zwischen diesen Enden mit Stützrollen versehen sind.

22. Vorrichtung nach einem der Ansprüche 20 und 21, dadurch gekennzeichnet, daß der Raum (18) außerdem mit einer Heiz- und Sauggruppe (62) versehen ist, die auf der Kammer montiert ist und einerseits explosionssichere elektrische Heizkörper, die dazu bestimmt sind, durch Regelung mittels eines Thermostaten in der Kammer eine Temperatur zwischen 20°C und 25°C zu gewährleisten, und andererseits einen Luftsauger umfaßt.

23. Vorrichtung nach Anspruch 4, dadurch gekennzeichnet, daß die Station (19) zur Entgegennahme der Formen mit den erhaltenen Platten aus einem Förderer (63) mit motorisierten Rollen, der eine leichte Versetzung in bezug auf die Senkrechte zum Raum (18) aufweist, und aus Detektoren zur Erfassung der Anwesenheit von Formen sowie stromabwärts vom Förderer (63) aus einem Lückendetektor besteht, wobei die motorisierten Rollen den Formen (1) eine lineare Geschwindigkeit verleihen, die geringer ist als die der stromabwärts gelegenen Empfangsvorrichtung.

24. Vorrichtung nach Anspruch 4, dadurch gekennzeichnet, daß die Station (20) zum Entformen der Platten eine manuelle Station ist, die aus einem Förderer (64) besteht, dessen Antrieb mittels eines Pultes (65) gesteuert werden kann.

25. Vorrichtung nach Anspruch 4, dadurch gekennzeichnet, daß die Station (20) in Form einer automatischen Station vorliegt, die mit einem Manipulationsroboter zum Ergreifen der erhaltenen Platten in den Formen und zum Transport dieser Platten zu einer stromabwärtigen Bearbeitungsstation oder zu einer Lagerstation (69) zusammenwirkt.

26. Vorrichtung nach Anspruch 4, dadurch gekennzeichnet, daß sie außerdem mit einer Station (66) zum Nuten ausgestattet ist, an der die erhaltenen Platten (1') mittels einer Führung ausgerichtet werden, dann unter eine Vorrichtung zum Nuten (67) gebracht werden, die auf einem Rahmen (68) montiert ist und den äußeren Umfang der Platten (1') beschreibt, welche entweder durch Ansaugung oder mittels einer mittig angeordneten Drückvorrichtung gehalten werden, die von einem Zylinder betätigt wird und ebenfalls an dem Rahmen (68) montiert ist.

27. Vorrichtung nach einem der Ansprüche 4 bis 26, dadurch gekennzeichnet, daß die verschiedenen Mittel zur Steuerung und Betätigung sowie die Detektoren mit einem zentralen programmierbaren Steuerautomaten (70) verbunden sind, der die verschiedenen Verschiebungen sowie die Füllung der Formen, die Zeit des Rüttelns dieser letzteren und ihre Verweilzeit in dem Polymerisationsraum (18) lenkt.

28. Platte, erhalten durch Anwendung des Verfahrens nach Anspruch 1 mittels der Vorrichtung nach einem der Ansprüche 2 bis 27, dadurch gekennzeichnet, daß sie aus einem Kunststoff auf der Basis von Methylmethacrylat besteht und eine Sichtfläche (6) mit einer glänzenden Oberflächenqualität und abgerundeten Kanten (7) aufweist.

29. Platte nach Anspruch 28, dadurch gekennzeichnet, daß sie an ihrer Rückseite, zumindest nahe ihrer Seiten, die ihren oberen und unteren Teilen entsprechen, oder an ihrem gesamten Umfang mit Einsätzen (8) zur Befestigung an Unterbau-Elementen versehen ist.

30. Platte nach einem der Ansprüche 28 und 29, dadurch gekennzeichnet, daß die Sichtfläche der Platte (1) einen körnigen Anblick bietet.
